# FASCICULE DE BREVET EUROPEEN

(11) **EP 1 806 834 B1**
(45) Date de publication et mention de la délivrance du brevet: **16.06.2010**
(21) Numéro de dépôt: 07290026.9
(22) Date de dépôt: 09.01.2007
(51) Int. Cl.: H02N 2/16, H01L 41/09

(54) **Moteur piézoélectrique rotatif**
Piezoelektrischer Rotationsmotor
Rotary piezoelectric motor

(30) Priorité: 09.01.2006 FR 0600170
(43) Date de publication de la demande: 11.07.2007
(73) Titulaire: Sagem Défense Sécurité, 75015 Paris (FR)
(72) Inventeur: Robineau, Jacques, 75015 Paris (FR)
(74) Mandataire: Bérogin, Francis

(56) Documents cités:
- JP-A- 2 079 783
- JP-A- 6 022 566
- JP-A- 62 296 779
- JP-A- 63 167 686
- US-A- 5 726 518

## Description

La présente invention concerne d'une façon générale le domaine des moteurs piézoélectriques rotatifs, et plus spécifiquement elle concerne des perfectionnements apportés aux moteurs piézoélectriques rotatifs, comportant :
- un stator comportant une couronne statorique dentée,
- une embase fixe pour supporter la couronne statorique,
- un rotor ayant un patin rotorique annulaire en appui sur la couronne statorique sous un effort de précontrainte,
- des moyens de poussée propres à appuyer axialement le patin rotorique sur la couronne statorique avec précontrainte, et
- des moyens piézoélectriques d'excitation de la couronne statorique propres à exciter celle-ci et à provoquer le déplacement rotatif du rotor.

Dans un moteur piézoélectrique rotatif, dit aussi moteur rotatif à onde progressive, l'entraînement du rotor est dû à la friction des dents du stator sur la surface de contact du rotor. La qualité du contact entre stator et rotor est déterminante pour la régularité de déplacement du rotor et le couple maximum du moteur. Le contact approprié entre stator et rotor est obtenu en pressant le rotor contre le stator de manière à soumettre le rotor à une force de précontrainte. Pour fixer les idées, dans un exemple typique la force appliquée au rotor est de l'ordre de 200 N pour un moteur de 60 mm de diamètre.

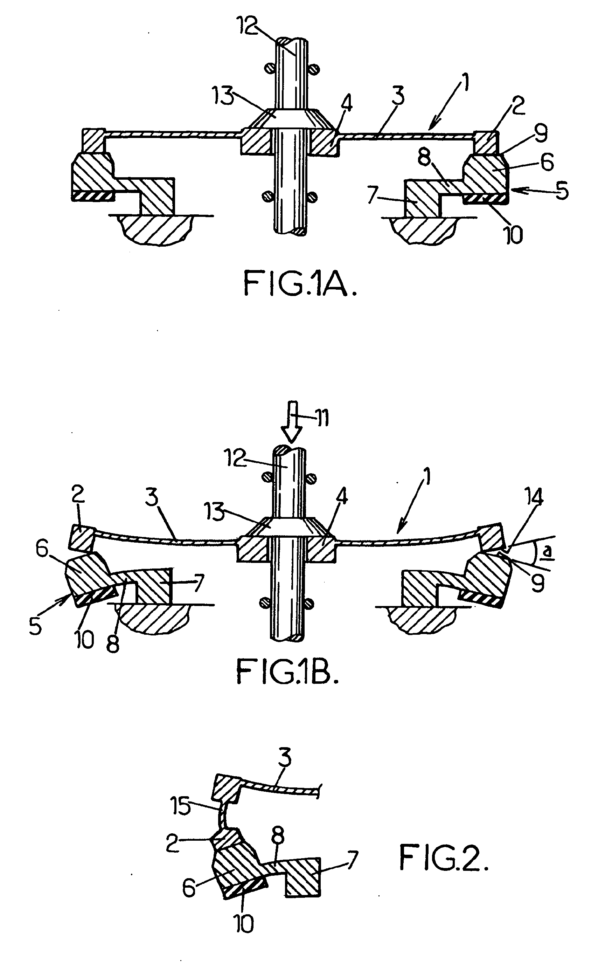

A la figure 1A des dessins annexés, on a représenté très schématiquement une structure simplifiée d'un moteur piézoélectrique rotatif limitée aux seuls organes concernés par l'invention. Le rotor 1 se présente sous la forme générale d'une roue ayant un patin de contact 2 annulaire réuni par un voile 3 à un moyeu 4 central. Le stator 5 se présente sous la forme générale d'une structure annulaire fixe comportant une couronne statorique 6 annulaire qui possède une face dentée 9 sur laquelle est en appui le patin de contact 2 et qui est supportée en porte-à-faux vers l'extérieur sur une embase 7 annulaire par l'intermédiaire d'une jante statorique 8 d'étendue sensiblement radiale ; le matériau piézoélectrique 10 est fixé sous la couronne statorique 6 à l'opposé de la face dentée 9.

La mise en précontrainte du moteur est obtenue en exerçant une force axiale sur le rotor 4 (flèche 11 à la figure 1B). De façon pratique, la force d'appui est appliquée axialement sur l'axe 12 du rotor muni à cet effet d'une collerette 13 formant butée axiale.

Sous l'action de la force 11, le voile 3 du rotor est déformé élastiquement et le patin de contact 2 qui en est solidaire est gauchi de sorte que sa face de contact 14 devient inclinée. Sous l'effort de poussée communiqué par le patin de contact 2 du rotor 1, la couronne statorique 6 est repoussée élastiquement à l'opposé du rotor avec gauchissement de la jante statorique 8 sous l'action du couple engendré du fait de l'écart entre le support de la couronne statorique et l'application de l'effort ;ainsi, sa face dentée 9 devient inclinée dans une direction angulaire opposée à l'inclinaison de la face de contact 14 du patin de contact 2 rotorique. Comme visible à la figure 1B, les deux faces 9 de la couronne statorique 6 et 14 du patin de contact 2 rotorique, qui devraient porter à plat l'une sur l'autre, forment entre elles un angle a (fortement exagéré sur la figure 1B pour rendre la lecture plus claire) : le contact entre les deux faces devient partiel.

Il en résulte une dégradation importante de l'homogénéité de pression entre le stator et le rotor, ce qui affecte notablement la régularité de déplacement du rotor.

Pour remédier à cet inconvénient, il a été proposé, comme montré à la figure 2, de raccorder le patin de contact 2 rotorique au voile 3 par l'intermédiaire d'une jante 15 déformable d'étendue approximativement axiale. Comme visible à la figure 2, lorsque le voile 3 se déforme sous l'action de la force de précontrainte axiale, la jante 15 peut communiquer cette force au patin de contact 2 tout en se déformant de manière que la face de contact 14 du patin de contact 2 rotorique peut adopter une inclinaison inverse de celle qu'elle avait en l'absence de jante ; autrement dit le patin de contact rotorique peut accompagner la couronne statorique dans sa flexion et peut alors mieux s'appliquer contre la face dentée 9 de la couronne statorique 6.

Malgré l'amélioration procurée par la jante 15, le contact entre le rotor et le stator demeure imparfait et insuffisamment homogène au cours de la rotation. En outre, il n'est pas satisfaisant qu'en fonctionnement de nombreux organes soient en situation de gauchissement. Pour mieux fixer les idées, en reprenant l'exemple précité d'un moteur ayant un diamètre de 60 mm avec une force de précontrainte d'environ 200 N, le rotor subit, sous l'action de cette précontrainte, un enfoncement d'environ 600 µm et la couronne statorique se déforme avec un enfoncement de l'ordre de 15 µm tandis qu'elle doit pouvoir vibrer sur un mode propre à une fréquence d'environ 40 kHz.

Pour remédier aux inconvénients précités présentés par les moteurs piézoélectriques du genre indiqué ci-dessus et proposer une structure perfectionnée qui permette de mieux donner satisfaction aux diverses exigences de la pratique, les documents de brevet US 5, 726,518, JP 06 022 566 A, JP 02 079 783 A, JP 62 296 779 A et JP 63 167 686 A décrivent des moteurs piézoélectriques rotatifs tels que mentionnés ci-dessus et agencés de sorte que l'embase fixe est conformée pour supporter annulairement la couronne statorique de façon que les efforts de support soient appliqués à la couronne statorique sensiblement symétriquement par rapport au plan cylindrique médian de cette dernière. Grâce à cet agencement, la couronne statorique n'est plus supportée en porte-à-faux et, sous l'effort de précontrainte, elle s'enfonce sensiblement sans gauchissement, avec sa face dentée de contact 9 demeurant sensiblement parallèlement à elle-même ;la face de contact 14 du patin rotorique 2, supporté par la jante 15 élastique et qui présente ainsi une flexibilité de positionnement suffisante, peut accompagner l'enfoncement de la couronne statorique tout en restant en appui contre celle-ci sur sensiblement toute sa surface.

Cette solution a donné lieu à diverses réalisations pratiques.

Dans un premier type de réalisation, selon JP 02 079 783, JP 06 022 566 A et JP 62 296 779 A, l'embase fixe comporte deux couronnes fixes disposées de part et d'autre de la couronne statorique, l'une intérieure et l'autre extérieure, et toutes deux écartées radialement de cette couronne statorique et deux moyens de suspension annulaires et élastiquement déformables sont interposés symétriquement entre la couronne statorique et respectivement les deux couronnes fixes, les deux moyens de suspension pouvant être respectivement deux ensembles de bras régulièrement répartis, comme proposé dans JP 02 079 783, et conformés pour autoriser un déplacement axial de la couronne statorique.

Dans un second type de réalisation connu par US 5,726,518 et JP 06 022 566, l'embase fixe comporte une couronne fixe sous-jacente à la couronne statorique et un corps annulaire élastiquement déformable axialement interposé entre la couronne fixe et la couronne statorique.

Le but de l'invention est de proposer de tels moteurs aussi simples et peu onéreux à mettre en oeuvre, et sans surcoût sensible de fabrication.

A cet effet, les moteurs de l'invention sont définis par la revendication 1, selon que l'embase fixe est du premier ou du second type indiqué ci-dessus.

Dans le premier type d'embase, les bras en forme générale de C et/ou de S forment des bras de levier selon des directions approximativement tangentielles qui sont propres à procurer une élasticité verticale sensible à la couronne statorique. Pour une réalisation plus compacte axialement, selon la revendication 2, les bras sont conformés de manière que la couronne statorique soit située axialement approximativement à hauteur des deux couronnes fixes. Dans le second type d'embase, dans lequel le corps annulaire comprend un corps tubulaire défini par au moins une paroi élastiquement déformable, cette paroi peut être métallique selon la revendication 5, ou/et le volume intérieur du corps tubulaire peut être rempli d'un gaz sous pression selon la revendication 3; dans ce cas, il est intéressant que le corps annulaire possède deux parois latérales opposées sensiblement en forme de C ou de S simple ou multiple, élastiquement déformables et raccordées de façon étanche à la couronne statorique, de part et d'autre de celle-ci, et à l'embase fixe, selon la revendication 4.

La solution technique perfectionnée conforme à l'invention telle qu'elle vient d'être exposée dans son aspect général et dans diverses variantes de réalisation permet d'écarter les inconvénients exposés plus haut des moteurs piézoélectriques connus.

Simultanément, la structure perfectionnée selon l'invention permet de conserver d'autres avantages particulièrement intéressants, au moins dans certains domaines d'utilisation de ces moteurs, et procurés par les moteurs selon US 5,726,518.

Ainsi, de façon tout particulièrement intéressante, le rotor peut être réduit à sa seule partie fonctionnellement utile qui est le patin de contact et ce patin de contact, réalisable en pratique par un simple rail annulaire, peut être rendu solidaire directement de la pièce rotative à mouvoir. Dans ces conditions, le rotor disparaît en tant que constituant organique du moteur et le moteur est réduit au seul stator. Non seulement cette structure perfectionnée est moins onéreuse, mais elle est également moins encombrante.

Au surplus, la solidarisation du patin de contact rotorique à la pièce à mouvoir conduit à la suppression de l'arbre rotorique. L'embase fixe peut être évidée centralement coaxialement à la couronne statorique, ce qui, associé à la solidarisation du patin de contact rotorique à la pièce à mouvoir, permet de dégager au centre du stator un passage pour les faisceaux de câblage.

L'invention sera mieux comprise à la lecture de la description détaillée qui suit de certains modes de réalisation de l'état de la technique et d'autres selon l'invention, donnés uniquement à titre d'exemples nullement limitatifs. Dans cette description, on se réfère aux dessins annexés sur lesquels:
- les figures 1A et 1B sont des représentations très schématiques, limitées aux seuls organes utiles à la compréhension de l'invention, d'un moteur piézoélectrique de l'état de la technique montré respectivement sans précontrainte et avec précontrainte appliquée au rotor ;
- la figure 2 est une vue très schématique partielle d'une variante de réalisation d'un moteur piézoélectrique de l'état de la technique ;
- la figure 3 est une vue très schématique concrétisant les dispositions principales d'autres moteurs piézoélectriques de l'état de la technique ;
- les figures 4A et 4B sont des vues respectivement de dessus et de côté en coupe diamétrale d'un mode de réalisation préféré d'un stator d'un premier type agencé selon l'invention ;
- la figure 5 est une vue en coupe diamétrale d'un moteur piézoélectrique incorporant un stator selon les figures 4A et 4B;
- les figures 6 et 7 sont des vues en coupe diamétrale de moteurs piézoélectriques respectivement de l'état de la technique et d'un mode de réalisation incorporant un stator d'un second type agencé selon l'invention ;et
- la figure 8 est une vue fragmentaire illustrant, en coupe diamétrale, une variante de réalisation de l'agencement montré à la figure 7.

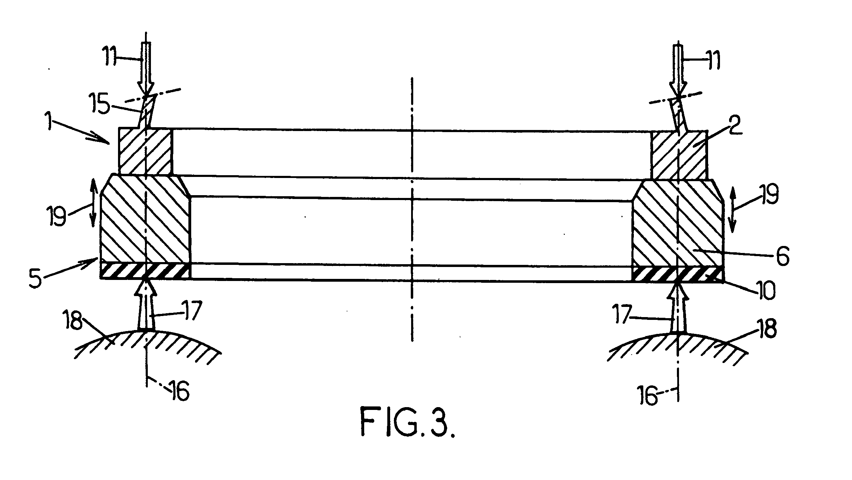

En se référant tout d'abord plus spécifiquement à l'état de la technique selon la figure 3 (sur laquelle on a conservé les mêmes références numériques pour désigner les parties et organes analogues à ceux des figures 1A, 1B et 2), l'embase 18 fixe, représentée sous une forme schématisée, est conformée pour supporter annulairement la couronne statorique 6 de façon que les efforts de support soient appliqués à la couronne statorique 6 sensiblement symétriquement par rapport au plan 16 cylindrique médian de cette dernière. Par application symétrique, on entend désigner le fait que les multiples efforts de support appliqués à la couronne statorique 6 ont, en tout emplacement le long de la couronne, une résultante 17 située dans le plan médian cylindrique de la couronne statorique 6.

Sur la figure 3, l'embase fixe n'est pas représentée de façon réaliste et diverses solutions possibles de réalisation seront exposées plus loin ; seul l'effort de support est schématisé par les flèches 17 qui symbolisent la résultante de ces efforts coïncidant avec le plan médian 16 précité.

Avec un agencement de stator ainsi constitué, on est assuré que la couronne statorique peut s'effacer élastiquement (doubles flèches 19) sous la poussée de l'effort de précontrainte appliqué au rotor. Mais la couronne statorique n'est plus soumise à un couple et ne peut plus fléchir ni se gauchir. On assure ainsi un contact beaucoup plus homogène entre la face dentée de la couronne statorique 6 et le patin de contact 3 rotorique.

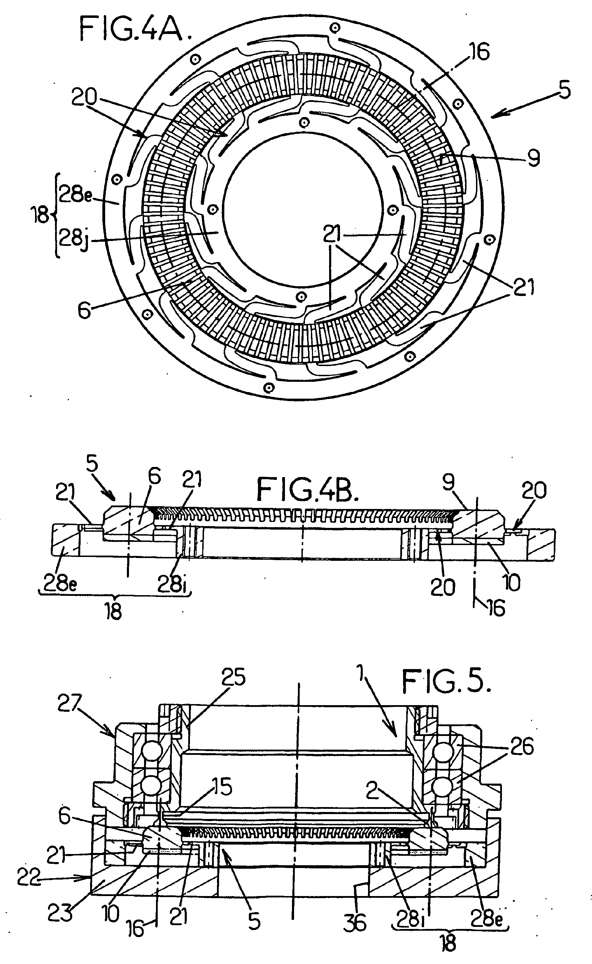

Aux figures 4A et 4B est représenté un premier mode de réalisation, qui est actuellement préféré en pratique, d'un stator 5 agencé conformément à l'invention. L'embase 18 fixe comporte deux couronnes fixes disposées de part et d'autre de la couronne statorique 6, l'une 28i située à l'intérieur de la couronne statorique 6 et l'autre 28e située à l'extérieur de la couronne statorique 6. Les deux couronnes fixes 28i, 28e sont écartées radialement de la couronne statorique 6. Enfin, deux moyens de suspension annulaires et élastiquement déformables, désignés génériquement par la référence 20, sont interposés symétriquement entre la couronne statorique et respectivement les deux couronnes fixes 28i et 28e.

Les deux moyens de suspension 20 peuvent être de divers types. De façon avantageuse, ils peuvent se présenter sous forme de respectivement deux ensembles de bras 21 régulièrement répartis qui sont interposés entre la couronne statorique 6 et respectivement les deux couronnes fixes 28i, 28e et qui sont conformés pour autoriser un déplacement axial élastique de la couronne statorique 6. Dans un mode de réalisation préféré représenté aux figures 4A et 4B, les bras 21 sont en forme générale de S couché qui sont solidarisés par leurs extrémités respectivement à la couronne statorique 6 et à l'une ou l'autre des couronnes fixes 28i, 28e.

Comme mieux visible à la figure 4B, il est avantageux que les bras soient sensiblement plans, comme c'est le cas pour les bras 21 en S du mode de réalisation préféré qui est illustré: on obtient alors que les deux couronnes fixes 28i, 28e s'étendent sensiblement à hauteur de la couronne statorique 6, de telle sorte que l'ensemble peut être remarquablement compact axialement.

A titre d'exemple, la figure 5 représente, en coupe diamétrale, l'agencement d'ensemble d'un mode de réalisation concret d'un moteur piézoélectrique rotatif incorporant le stator 5 des figures 4A et 4B. L'embase 18 fixe du stator 5 est reçue dans un carter statorique 22 en forme de coupe à fond 23. La couronne fixe 28e extérieure est calée dans le carter statorique 22 contre la paroi latérale de celui-ci.

De son côté, le rotor 1 comprend une bague 25 dont une extrémité est équipée d'une jante 15 d'étendue sensiblement axiale dont le bord libre est solidaire d'un patin de contact 2 rotorique qui est en appui contre la couronne 6 statorique. La bague 25 est montée à libre rotation, par l'intermédiaire d'un ou plusieurs roulements 26 tels que des roulements à billes comme montré à la figure 5, dans un carter rotorique 27 qui est lui-même assemblé mécaniquement, par exemple par bridage ou par vissage, au carter statorique 22. L'effort de précontrainte du patin rotorique 2 sur la couronne statorique 6 est obtenu en agissant axialement sur la bague 25 du rotor.

Un second type de réalisation de l'état de la technique consiste en ce que l'embase 18 fixe comporte une couronne fixe sous-jacente à la couronne statorique 6 et en ce qu'un corps annulaire 29 élastiquement déformable axialement est interposé entre la couronne fixe et la couronne statorique 6. Pour le reste, l'agencement d'ensemble du moteur peut rester analogue à celui décrit plus haut en regard de la figure 5. Dans ce cas, l'embase 18 fixe est constituée par le carter 22 et la couronne fixe de l'embase 18 peut, de façon simple, être constituée par le fond 23 du carter statorique 22. Ce type de réalisation peut donner lieu à plusieurs variantes de réalisation.

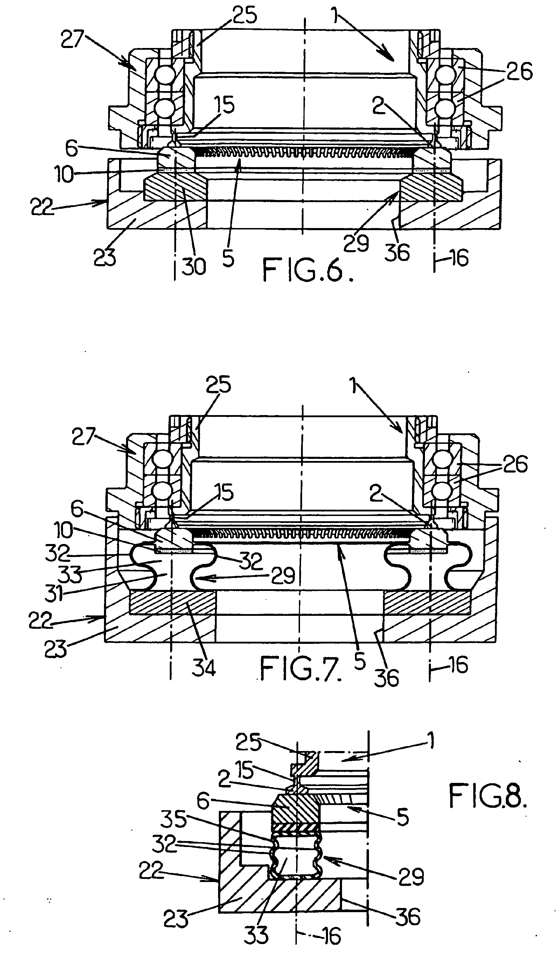

A la figure 6 est illustré, en coupe diamétrale, l'agencement d'ensemble d'un moteur piézoélectrique rotatif connu (les mêmes références numériques sont conservées pour désigner les mêmes organes qu'à la figure 5) muni d'une première variante de réalisation de la structure précitée qui consiste en ce que le corps annulaire 29 interposé entre la couronne fixe constituée par le fond 23 du carter statorique 22 et la couronne statorique 6 est un bloc annulaire 30 en un matériau élastiquement déformable, notamment en élastomère.

Selon l'invention, une seconde variante de réalisation consiste en ce que le corps annulaire 29 est un corps tubulaire 31 qui est défini par au moins une paroi 32 élastiquement déformable, notamment métallique, et dont le volume intérieur 33 peut être rempli d'un gaz sous pression. A la figure 7 est illustré, en coupe diamétrale, l'agencement d'ensemble d'un moteur piézoélectrique rotatif (les mêmes références numériques sont conservées pour désigner les mêmes organes qu'à la figure 5) muni d'un exemple de réalisation de la structure précitée qui consiste en ce que le corps tubulaire 31 possède deux parois latérales 32 opposées sensiblement en forme de C ou de S (comme illustré) simple ou multiple, élastiquement déformables, et notamment métalliques, et raccordées de façon étanche à la couronne statorique 6 de part et d'autre de celle-ci et à l'embase 18 fixe. Dans l'exemple illustré, pour simplifier le montage, on prévoit que les deux parois latérales 32 sont fixées éventuellement de façon étanche, à l'opposé de la couronne statorique 6, à une base annulaire 34 qui elle-même repose sur le fond 23 du carter 22 et est calée dans ce dernier. Dans ces conditions, la couronne statorique 6 sur laquelle est fixé le matériau piézoélectrique 10, la base annulaire 34 et les deux parois latérales 32 forment un ensemble préassemblé qui est mis en place en bloc lors du montage du stator 5.

Une variante de l'exemple de réalisation de la figure 7 propre à faciliter l'assemblage, consiste, comme montré à la figure 8, à concevoir le corps annulaire 29 sous forme d'une chambre 35 annulaire métallique, dont le volume intérieur 33 peut éventuellement être rempli d'un gaz sous pression ; les deux parois latérales 32 de cette chambre annulaire 35 sont en forme de C et/ou de S simple ou multiple. La chambre 35 est interposée entre la couronne statorique 6 et le fond 23 du carter 22 dans lequel elle est bloquée en position. La chambre 35 constitue une pièce structurelle en elle-même dont la mise en place a lieu au cours du montage du stator.

La solution technique perfectionnée conforme à l'invention telle qu'elle vient d'être exposée dans son aspect général et dans diverses variantes de réalisation en référence aux figures 4A, 4B, 5, 7 et 8, permet de maintenir la face de contact 9 de la couronne statorique 6 en permanence sensiblement parallèle à elle-même quelle que soit la position axiale de la couronne statorique, et ainsi d'écarter les inconvénients des moteurs piézoélectriques actuels.

Toutefois, la structure perfectionnée selon l'invention permet d'obtenir d'autres avantages particulièrement intéressants au moins dans certains domaines d'utilisation de ces moteurs.

Ainsi, de façon connue et tout particulièrement intéressante, le rotor 1 peut être réduit à sa seule partie fonctionnellement utile qui est le patin de contact 2 et ce patin de contact, réalisable en pratique par un simple rail annulaire, peut être rendu solidaire directement de la pièce rotative à mouvoir. C'est ce type d'agencement simplifié du rotor 1 qui est représenté aux figures 5 à 7, sur lesquelles le patin de contact 2 est fixé, par l'intermédiaire de la jante 15, directement sur l'extrémité de la bague 25 précitée qui constitue la pièce à mouvoir en rotation. Dans ces conditions, le rotor 1 disparaît en tant que constituant organique du moteur et le moteur est réduit au seul stator 5. Non seulement cette structure perfectionnée est moins onéreuse, mais elle est également moins encombrante notamment axialement comme on peut le constater sur les figures 5 à 7.

Au surplus, la solidarisation directe du patin de contact 2 rotorique à la pièce 25 à mouvoir en rotation permet d'envisager que ce soit par l'intermédiaire de ladite pièce 25 que soit appliquée au patin de contact 2 la force de précontrainte requise pour un fonctionnement correct du moteur. Il devient alors concevable de supprimer l'arbre rotorique 12 présent dans les moteurs antérieurs. Dans ces conditions, on peut prévoir que l'embase 18 fixe soit évidée centralement coaxialement à la couronne 6 statorique par une ouverture 36. Dans les agencements montrés aux figures 5 à 7, l'ouverture 36 centrale est située dans le fond 23 du carter statorique 22 et est sensiblement coaxiale à la couronne 6 statorique ; son diamètre peut être sensiblement égal au diamètre interne de la couronne fixe 18i intérieure. L'élimination de l'arbre rotorique 12 associée au dégagement central du stator et notamment du carter statorique 22 conduisent à une structure de moteur dégagée centralement et propre à former un passage pour des faisceaux de câblage. Par ce biais également, on constitue un moteur globalement moins encombrant.

## Revendications

1. Moteur piézoélectrique rotatif, comportant:
- un stator (5) comportant une couronne (6) statorique dentée,
- une embase (18) fixe pour supporter la couronne (6) statorique,
- un rotor (1) ayant un patin rotorique (2) annulaire en appui sur la couronne (6) statorique sous un effort de précontrainte,
- des moyens de poussée propres à appuyer axialement le patin rotorique (2) sur la couronne (6) statorique avec précontrainte, et
- des moyens piézoélectriques (10) d'excitation de la couronne (6) statorique propres à exciter celle-ci et à provoquer le déplacement rotatif du rotor (1),
l'embase (18) fixe étant conformée pour supporter annulairement la couronne (6) statorique de façon que les efforts de support soient appliqués à la couronne (6) statorique sensiblement symétriquement par rapport au plan cylindrique médian (16) de cette dernière, l'embase (18) fixe étant de l'un ou l'autre de deux types, dont le premier type comporte deux couronnes (28i, 28e) fixes disposées de part et d'autre de la couronne (6) statorique, l'une (28i) intérieure et l'autre (28e) extérieure, et toutes deux écartées radialement de la couronne (6) statorique, et deux moyens de suspension (20) annulaires et élastiquement déformables sont interposés symétriquement entre la couronne (6) statorique et respectivement les deux couronnes (28i, 28e) fixes, les deux moyens de suspension (20) étant respectivement deux ensembles de bras (21) régulièrement répartis et conformés pour autoriser un déplacement axial de la couronne (6) statorique, et dont le second type comporte une couronne (23) fixe sous-jacente à la couronne (6) statorique et un corps annulaire (29) élastiquement déformable axialement interposé entre la couronne (23) fixe et la couronne (6) statorique,
**caractérisé en ce que**, si l'embase fixe (18) est du premier type, les bras (21) sont en forme générale de C et/ou de S, tandis que si l'embase fixe (18) est du second type, le corps annulaire (29) comprend un corps tubulaire (31) qui est défini par au moins une paroi (32) élastiquement déformable.

2. Moteur piézoélectrique selon la revendication 1, dont l'embase fixe (18) est du premier type, **caractérisé en ce que** les bras (21) sont conformés de manière que la couronne (6) statorique soit située axialement approximativement à hauteur des deux couronnes (28i, 28e) fixes.

3. Moteur piézoélectrique selon la revendication 1, dont l'embase fixe (18) est du second type, **caractérisé en ce que** le volume intérieur (33) du corps tubulaire (31) est rempli d'un gaz sous pression.

4. Moteur piézoélectrique selon la revendication 1 ou 3, dont l'embase fixe (18) est du second type, **caractérisé en ce que** le corps annulaire (29) possède deux parois latérales (32) opposées sensiblement en forme de C ou de S, simple ou multiple, élastiquement déformables et raccordées de façon étanche à la couronne statorique (6), de part et d'autre de celle-ci, et à l'embase (18) fixe.

5. Moteur piézoélectrique selon l'une quelconque des revendications 1, 3 et 4, dont l'embase fixe (18) est du second type, **caractérisé en ce que** la paroi (32) élastiquement déformable est métallique.

6. Moteur piézoélectrique selon l'une quelconque des revendications 1 à 5, **caractérisé en ce que** le patin de contact (2) rotorique est solidaire de la pièce rotative (25) à mouvoir.

7. Moteur piézoélectrique selon la revendication 6, **caractérisé en ce que** l'embase (18) fixe est évidée (36) centralement coaxialement à la couronne (6) statorique.

## Claims

1. Rotary piezoelectric motor, comprising:
- a stator (5) comprising a toothed stator ring (6),
- a fixed base (18) for supporting the stator ring (6),
- a rotor (1) having an annular rotor shoe (2), which bears against the stator ring (6) under pre-stressing force,
- pushing means capable of pressing the rotor shoe (2) axially onto the stator ring (6) with pre-stressing, and
- piezoelectric excitation means (10) for the stator ring (6) capable of exciting same and of causing the rotary displacement of the rotor (1),
the fixed base (18) being shaped so as to annularly support the stator ring (6) such that the supporting forces are applied to the stator ring (6) substantially symmetrically relative to the cylindrical mid-plane (16) thereof, the fixed base (18) being one of either two types, the first type of which comprises two fixed rings (28i, 28e) arranged on either side of the stator ring (6), the one being inner (28i) and the other (28e) outer, and both being radially separated from the stator ring (6), and two annular and elastically deformable suspension means (20) are interposed symmetrically between the stator ring (6) and the two stationary rings (28i, 28e), respectively, the two suspension means (20) being two sets of arms (21), respectively, which are spaced apart evenly and shaped so as to permit axial displacement of the stator ring (6), and the second type of which comprises a fixed ring (23) lying beneath the stator ring (6) and an axially elastically deformable annular body (29), which is interposed between the fixed ring (23) and the stator ring (6), **characterised in that**, if the fixed base (18) is of the first type, the arms (21) have an overall C and/or S shape, whereas, if the fixed base (18) is of the second type, the annular body (29) includes a tubular body (31) which is defined by at least one elastically deformable wall (32).

2. Piezoelectric motor of claim 1, the fixed base (18) of which is of the first type, **characterised in that** the arms (21) are shaped such that the stator ring (6) is axially situated approximately level with the two fixed rings (28i, 28e).

3. Piezoelectric motor of claim 1, the fixed base (18) of which is of the second type, **characterised in that** the interior volume (33) of the tubular body (31) is filled with a pressurized gas.

4. Piezoelectric motor as claimed in claim 1 or 3, the fixed base (18) of which is of the second type, **characterised in that** the annular body (29) has two opposing side walls (32), which are substantially C or S-shaped, single or multiple, elastically deformable and leaktightly connected to the stator ring (6), on both sides thereof, and to the fixed base (18).

5. Piezoelectric motor as claimed in any of claims 1, 3 or 4, the fixed base (18) of which is of the second type, **characterised in that** the elastically deformable wall (32) is metallic.

6. Piezoelectric motor as claimed in any of claims 1 to 5, **characterised in that** the rotor contact shoe (2) is integral with the rotary part (25) to be moved.

7. Piezoelectric motor of claim 6, **characterised in that** the fixed base (18) is centrally hollowed out coaxially with the stator ring (6).

## Patentansprüche

1. Piezoelektrischer Drehmotor, der aufweist:
- einen Stator (5), der einen Stator-Zahnkranz (6) aufweist,
- eine feste Grundplatte (18), um den Statorkranz (6) zu tragen,
- einen Rotor (1) mit einem ringförmigen Rotorschuh (2), der unter einer Vorspannungskraft auf dem Statorkranz (6) aufliegt,
- Schubeinrichtungen, die den Rotorschuh (2) axial mit Vorspannung auf den Statorkranz (6) drücken können, und
- piezoelektrische Einrichtungen (10) zur Anregung des Statorkranzes (6), die diesen anregen und die Drehbewegung des Rotors (1) bewirken können,
wobei die feste Grundplatte (18) angepasst ist, um den Statorkranz (6) ringförmig derart zu tragen, dass die Tragkräfte auf den Statorkranz (6) im Wesentlichen symmetrisch in Bezug auf dessen zylindrische Mittelebene (16) aufgebracht werden,
wobei die feste Grundplatte (18) von der einen oder anderen von zwei Arten ist, von denen die erste Art zwei feste Kränze (28i, 28e) aufweist, die zu beiden Seiten des Statorkranzes (6), der eine (28i) innen und der andere (28e) außen und beide radial vom Statorkranz (6) entfernt angeordnet sind, und bei der zwei ringförmige und elastisch verformbare Aufhängeeinrichtungen (20) symmetrisch zwischen dem Statorkranz (6) und jeweils den zwei festen Kränzen (28i, 28e) eingefügt sind, wobei die zwei Aufhängeeinrichtungen (20) jeweils zwei Einheiten von Armen (21) sind, die gleichmäßig verteilt und angepasst sind, um eine axiale Verschiebung des Statorkranzes (6) zu erlauben, und von denen die zweite Art einen festen Kranz (23) unterhalb des Statorkranzes (6) und einen elastisch verformbaren ringförmigen Körper (29) aufweist, der axial zwischen dem festen Kranz (23) und den Statorkranz (6) eingefügt ist,
**dadurch gekennzeichnet, dass**, wenn die feste Grundplatte (18) von der ersten Art ist, die Arme (21) die generelle Form eines C und/oder eines S haben, während, wenn die feste Grundplatte (18) von der zweiten Art ist, der ringförmige Körper (29) einen rohrförmigen Körper (31) enthält, der von mindestens einer elastisch verformbaren Wand (32) definiert wird.

2. Piezoelektrischer Motor nach Anspruch 1, dessen feste Grundplatte (18) von der ersten Art ist, **dadurch gekennzeichnet, dass** die Arme (21) so angepasst sind, dass der Statorkranz (6) sich axial in etwa auf der Höhe der zwei festen Kränze (28i, 28e) befindet.

3. Piezoelektrischer Motor nach Anspruch 1, dessen feste Grundplatte (18) von der zweiten Art ist, **dadurch gekennzeichnet, dass** das Innenvolumen (33) des rohrförmigen Körpers (31) mit einem Druckgas gefüllt ist.

4. Piezoelektrischer Motor nach Anspruch 1 oder 3, dessen feste Grundplatte (18) von der zweiten Art ist, **dadurch gekennzeichnet, dass** der ringförmige Körper (29) zwei gegenüberliegende Seitenwände (32) im Wesentlichen in Form eines C oder eines S aufweist, die einfach oder mehrfach, elastisch verformbar und dicht mit dem Statorkranz (6) zu beiden Seiten von diesem und mit der festen Grundplatte (18) verbunden sind.

5. Piezoelektrischer Motor nach einem der Ansprüche 1, 3 und 4, dessen feste Grundplatte (18) von der zweiten Art ist, **dadurch gekennzeichnet, dass** die elastisch verformbare Wand (32) aus Metall ist.

6. Piezoelektrischer Motor nach einem der Ansprüche 1 bis 5, **dadurch gekennzeichnet, dass** der Rotor-Kontaktschuh (2) fest mit dem zu bewegenden drehbaren Bauteil (25) verbunden ist.

7. Piezoelektrischer Motor nach Anspruch 6, **dadurch gekennzeichnet, dass** die feste Grundplatte (18) zentral koaxial zum Statorkranz (6) ausgehöhlt ist (36).
